# EUROPÄISCHE PATENTSCHRIFT

(11) **EP 4 122 695 B1**
(45) Veröffentlichungstag und Bekanntmachung des Hinweises auf die Patenterteilung: **10.12.2025**
(21) Anmeldenummer: 21186508.4
(22) Anmeldetag: 19.07.2021
(51) Int. Cl.: B32B 5/18, B32B 27/12, B32B 3/12, B29C 70/08, B29C 70/84, B29C 70/74, B29C 70/76, B29C 70/54, B29C 67/20, B32B 5/28, B29C 65/00, B29C 65/18, B29L 31/30

(54) **VERFAHREN ZUM HERSTELLEN EINES VERSTÄRKTEN KERNVERBUNDBAUTEILS, INSBESONDERE FÜR LUFTFAHRZEUGE, KERNVERBUNDBAUTEIL UND LUFTFAHRZEUG**
CORE COMPOSITE COMPONENT, AIRCRAFT AND METHOD FOR MANUFACTURING A REINFORCED CORE COMPOSITE COMPONENT, IN PARTICULAR FOR AIRCRAFT
PROCÉDÉ DE FABRICATION D'UN COMPOSANT COMPOSITE CENTRAL RENFORCÉ, EN PARTICULIER POUR AVIONS, COMPOSANT COMPOSITE CENTRAL ET AÉRONEF

(43) Veröffentlichungstag der Anmeldung: 25.01.2023
(73) Patentinhaber: Airbus Operations GmbH, 21129 Hamburg (DE)
(72) Erfinder: Endres, Gregor, 21129 Hamburg (DE); Zhao, Di, 21129 Hamburg (DE)
(74) Vertreter: KASTEL Patentanwälte PartG mbB

(56) Entgegenhaltungen:
- WO-A2-2011/088871
- DE-T2- 69 008 745
- FR-A1- 2 927 012
- US-A- 5 192 482
- US-A1- 2002 157 785

## Beschreibung

Die Erfindung betrifft ein Verfahren zum Herstellen eines verstärkten Kernverbundbauteils, insbesondere für Luftfahrzeuge. Weiterhin betrifft die Erfindung ein Kernverbundbauteil und ein Luftfahrzeug.

Kernverbunde bestehen per Definition aus einer Kernstruktur relativ großer Höhe bzw. Dicke, die zwischen zwei dünnen Decklagen angeordnet ist. Werden in diesen Verbunden Bereiche identifiziert, die einer erhöhten Belastung ausgesetzt sind so wird dieser Bereich lokal verstärkt. Dies erfolgt entweder durch den Einsatz von Kernstrukturen bzw. Bauteilen höherer Dichte oder aber durch das Einbringen von zum Beispiel Füllmassen.

In offene Zellstrukturen kann nach dem Stand der Technik lokal ein Werkstoff mit erhöhter Viskosität eingebracht werden, der das Volumen zwischen den beiden Decklagen vollständig auffüllt. Die Masse wird vor der Applikation der Decklagen bzw. Deckhäute eingebracht und mit den Häuten oder Decklagen ausgehärtet.

Diese Methode kann in der Fläche angewendet werden, aber auch im Bereich späterer Schnittkanten. Wird im Bereich der gefüllten Zellen geschnitten, ist der Rand bzw. die Kante gleichzeitig stabilisiert. Diese Methode wird zum Beispiel bei Fußbodenplatten im Kabinenbereich von Flugzeugen angewendet, um die Kanten gegen Schädigung durch Rollenbelastung z.B. von Food Trolleys zu stabilisieren.

Gerade bei der Fertigung von Fußbodenplatten für Flugzeug wird eine weitere bekannte Methodik zur lokalen Verstärkung und späteren Bauteilanbindung angewendet. Dabei werden vor der Applikation der Deckhäute zylindrische Plugs bzw. Stopfen in die Wabe eingelegt. Im fertigen Verbund werden diese durchbohrt.

Die Plugs oder Stopfen dienen der Anbindung und Kraftübertragung zwischen Platte und Bodenstruktur.

Eine weitere bekannte Möglichkeit, um lokal Anbindungen im Kernverbund zu generieren, ist das nachträgliche Einbringen von Inserts bzw. Einlegern. Hierzu wird ein definiertes Loch in den Verbund gebohrt, der dem späteren Insertdurchmesser entspricht. In einem zweiten Bearbeitungsschritt wird die Wabe zum Beispiel auf den 1,5-fachen Bohrungsdurchmesser ausgefräst und so eine Hinterschneidung generiert. Anschließend wird das Insert eingesetzt und die Kavität im Wabeninneren mit Klebstoff gefüllt. Im Gegensatz zu Methoden, bei denen die Füllmasse und der Einleger bzw. das Insert mit dem Aushärten der Deckhäute konsolidiert werden, erfordert das nachträgliche Einkleben von Inserts eine zusätzliche Härtungszeit und möglicherweise eine weitere Temperaturbehandlung in Abhängigkeit von der Werkstoffauswahl.

Um einen dreidimensionalen Körper herzustellen, ist es erforderlich zugeschnittene Platten zu fügen. Dabei ein Klebstoff erforderlich, um die beiden Teile unabhängig von der Stoßart miteinander kraftschlüssig zu verbinden. Zusätzlich kann die Kante vorab mit der oben beschriebenen Methode mit Füllmasse verstärkt werden.

Um geforderte Toleranzen zu erfüllen, ist der Einsatz von Werkzeugen erforderlich, die die Einzelteile bis zur vollständigen Vernetzung der Klebstoffe in Position halten. Je nach Standzeit und Produktionsrate ist dazu eine größere Anzahl von Werkzeugen erforderlich. Die Anzahl wiederum spiegelt sich in den NRC-Kosten wider.

Bei bekannten Technologien zum Erzeugen lokaler Verstärkungen oder Befestigungspunkte in Sandwichkonstruktionen werden diese zumeist vor dem Anbringen beider Decklagen appliziert. Typischerweise werden Stecker oder Vergussteile in den Kern bzw. die Kernstruktur eingesetzt und zusammen mit den Decklagen ausgehärtet. Eine erforderliche individuelle Ausgestaltung der Sandwichkonstruktion bzw. Platte muss deshalb bereits in einem frühen Stadium erfolgen, was zur Folge hat, dass eine große Menge an Teilen vorbereitet und gelagert bzw. vorgehalten werden muss.

Wie eingangs beschrieben werden lokale Verstärkungen in Wabenverbunden nach dem Stand der Technik durch Auffüllen der Wabenzellen oder durch Einsetzen von Stopfen erreicht. Letztere sind bei Schaumstoffen auch denkbar. Das Einbringen von Füllmassen ist aufgrund der geschlossenen Porosität aber nur nach vorheriger Schaffung von freiem Volumen durch mechanischen Austragt möglich. Weiterhin sind die Methoden nur vor der Applikation der Deckhäute anwendbar. Es ist also nicht möglich generische Platten nach diesen Methoden im Nachgang anzupassen.

DE 690 08 745 T2 offenbart ein Verfahren zur Herstellung eines flächigen Sandwichmaterials, das mit einer lokalen Verstärkung versehen ist, umfassend ein Kernmaterial, das zwischen zwei verstärkten Deckschichten liegt, wobei das Kernmaterial ein thermoplastisches, geschäumtes Kernmaterial oder ein Kernmaterial mit Wabenstruktur ist, und wobei die Deckschichten aus einem thermoplastischen faserverstärktem Kunststoff bestehen und mindestens einer lokalen Verstärkung, bestehend aus einer unter Druck in das Kernmaterial eingespritzten Menge an Kunststoffmaterial. Das Kunststoffmaterial erstarrt nach dem Einspritzen.

FR 2 927 012 A1 offenbart ein Verfahren zur Herstellung einer Wabenstruktur mit einer Wabenplatte und einem komplementären Element, wobei die Wabenplatte einen Wabenkern aufweist, der zwischen zwei Deckplatten eingebettet ist. Der Kern weist Hohlräume auf, die im Wesentlichen senkrecht zu den Deckplatten sind. Gemäß dem Verfahren wird eine Verbindungszone gewählt, um das Komplementärelement mit der Wabenplatte zu verbinden und die Zellen der Zellen der Verbindungszone mit einer Masse aus plastischem Material zu füllen, um das komplementäre Element im Inneren des Wabenkerns zu verankern. Das komplementäre Kunststoffelement wird durch eine der Abdeckplatten in der Verbindungszone umgespritzt, um die Zellen mit der Kunststoffmasse zu füllen und das komplementäre Element zu bilden.

Die US 2002 / 0 157 785 A1 offenbart ein Verfahren zum Verbinden von thermoplastischen Sandwichplatten mit thermoplastischen Schweißnähten ohne Autoklavenbehandlung der Verbindung.

Die bevorzugte Verbindung ist eine doppelte, versetzte Verbindung mit unterstützenden Titandopplern. Die Verbindung eignet sich besonders für das Zusammenfügen von Abschnitten eines kryogenen Tanks für Raumfahrzeuge.

WO 2011 / 088 871 A2 offenbart ein Verfahren zur Herstellung eines Sandwichbauteils, das einen Wabenkern mit mehreren Stegen und mindestens eine Deckschicht umfasst, wobei der Wabenkern aus einem zellulosebasierten Material besteht. Die Deckschicht wird aus einem faserverstärkten Halbzeug gebildet mit einer thermoplastischen Materialmatrix, wobei die Stege des Wabenkerns an Verbindungsstellen zur Deckschicht teilweise in die thermoplastische Materialmatrix der Deckschicht aufgenommen sind, so dass das Sandwichbauteil verklebt ist.

US 5 192 482 A offenbart ein flächiges, mit einer lokalen Verstärkung versehenes Sandwichmaterial mit einem Kernmaterial zwischen zwei verstärkten Schichten.

Die Erfindung hat sich zur Aufgabe gestellt, bei der Herstellung von Kernverbundbauteilen die Zykluszeiten zu reduzieren, die Flexibilität zu erhöhen und eine möglichst späte spezifische bzw. kundenspezifische Differenzierung zu ermöglichen. Weiterhin soll die Anzahl der vorzuhaltenden Teile reduziert sowie der Automatisierungsgrad und der Output bzw. die Produktionsrate erhöht werden.

Zum Lösen dieser Aufgabe schafft die Erfindung Verfahren zum Herstellen eines verstärkten Kernverbundbauteils gemäß Patentanspruch 1.

Vorteilhafte Ausgestaltungen sind Gegenstand der Unteransprüche.

Gemäß einem Aspekt schafft die Erfindung ein Verfahren gemäß Anspruch 1.

Insbesondere ermöglicht die Erfindung unter anderem das Einbringen von Füllmassen auch bei einer geschlossenen Porosität der Kernstruktur. Nach dem erfindungsgemäßen Verfahren wird zum Beispiel ein schaumbasierter Kernverbund im Nachgang mit lokalen Anbindungen und Verstärkungen versehen. Durch die Erfindung werden zudem die Zykluszeitenzeiten reduziert. Weiterhin wird anstatt einer großen Anzahl individueller Teile nur noch eine kleine Anzahl generischer, fertiger Teile bzw. Kernverbundelemente benötigt, die im Nachgang individuell angepasst oder bearbeitet werden. Darüber hinaus wird anstatt manueller Arbeit eine Automatisierung zum Beispiel durch CNC Verfahren ermöglicht. Zudem bleibt in durch Pins oder Stifte verstärkten Schaumstoff-Sandwichbauteilen die Verbindungsfläche für die Pins oder Faserpins intakt. Bevorzugt ist die Kernstruktur als eine Schaumstruktur wie zum Beispiel Schaumstoff ausgebildet.

Bevorzugt erfolgt das Einbringen der Schmelze unter Druck.

Vorteilhaft ist der Druck beim Einbringen der thermoplastischen Schmelze derart bemessen, dass sie die Schaumstruktur in dem Teilbereich der Kernstruktur verdrängt.

Beispielsweise sind neben dem Druck auch die Temperatur und die Viskosität der Schmelze Kontrollparameter bei der Durchführung des Verfahrens.

Die Kernstruktur kann auch als eine Wabenstruktur ausgebildet sein.

Zum Beispiel kann vor dem Einbringen bzw. Einpressen der Schmelze ein Teil der Kernstruktur entfernt werden, um dort die Schmelze einzubringen.

Bevorzugt wird der Druck beim Einbringen der Schmelze derart reduziert, dass ein weiterer Vorschub der Schmelze innerhalb der Kernstruktur durch deren beginnende Abkühlung und Verfestigung an der Front gestoppt wird und gleichzeitig ein Schrumpfen des Volumens der Schmelze innerhalb der Kernstruktur verhindert wird

Zumindest in eine der Decklagen wird mindestens eine Öffnung zum Einbringen der Schmelze in die Kernstruktur eingebracht, wobei die Öffnung als Spalt ausgebildet wird und sich zumindest teilweise in die Kernstruktur oder durch diese hindurch erstreckt.

Der Spalt kann zum Beispiel als eine Nut ausgebildet werden.

Insbesondere kann die Öffnung nach dem Einbringen der Schmelze durch diese thermoplastisch verschlossen werden.

Beispielsweise wird die Öffnung durch Bohren oder Fräsen erzeugt, um zum Beispiel einen Spalt bzw. Frässpalt zu bilden.

Bevorzugt drückt beim Einbringen der Schmelze ein Anpresselement im Bereich der Öffnung gegen die Decklage.

Erfindungsgemäß wird der Spalt durch Fräsen erzeugt, wobei gleichzeitig die erhitzte thermoplastische Schmelze in den sich bildenden Spalt eingepresst wird.

Bevorzugt wird das Kernverbundbauteil nach dem Abkühlen und Verfestigen der thermoplastischen Schmelze im Bereich des Spalts geschnitten, um zum Beispiel eine Kantenverstärkung im Bereich der Kernstruktur zu bilden.

Bevorzugt wird in Schritt a) ein weiteres Kernverbundelement zum Anfügen an das erste Kernverbundbauteil bereitgestellt, wobei die beiden Kernverbundelemente derart positioniert werden, dass ihre Kernstrukturen voneinander beabstandet nebeneinander liegen und einen Fügespalt bilden.

Vorteilhaft wird in Schritt b) die erhitzte thermoplastische Schmelze in den Fügespalt gedrückt, um sie in mindestens einen Teilbereich der jeweiligen Kernstruktur beider Kernverbundelemente einzupressen.

Bevorzugt wird das bereitgestellte Kernverbundelement aus einer Kernverbundplatte geschnitten.

Vorteilhaft wird die erhitzte thermoplastische Schmelze fortlaufend und/oder oder umlaufend entlang der Kontur des Kernverbundelements in die Kernstruktur injiziert, um eine Kantenverstärkung zu bilden.

Bevorzugt werden zwei mit dem Verfahren hergestellte Kernverbundbauteile im Bereich ihrer Kantenverstärkungen durch thermoplastisches Schweißen miteinander verbunden.

Vorteilhaft wird in der Öffnung ein Vorsprung eines lasttragenden Elements angeordnet, der zum Beispiel unter Einwirkung von Druck und Temperatur innerhalb der Öffnung zusammengepresst wird, und anschließend wird die erhitzte thermoplastische Schmelze in die Öffnung mit dem darin befindlichen Vorsprung injiziert, um das Kernverbundelement thermoplastisch mit dem lasttragenden Element zu verbinden.

Bevorzugt werden zwei oder mehr Kernverbundelemente beabstandet voneinander mit jeweils mindestens einem Vorsprung des lasttragenden Elements verbunden, um mit dem lasttragenden Element ein verstärktes Bauteil zu bilden.

Bevorzugt werden mehrere Öffnungen derart in der Kernstruktur ausgebildet, dass sie nach Einbringen und Abkühlen der thermoplastischen Schmelze Lastpfade einer bionischen Struktur bilden.

Mit dem hier beschriebenen Verfahren wird insbesondere ein Werkstück bearbeitet, das durch das Kernverbundelement gebildet wird.

Gemäß einem anderen Aspekt schafft die Erfindung ein Kernverbundbauteil gemäß Anspruch 10.

Bevorzugt ist das Kernverbundbauteil mit dem erfindungsgemäßen Verfahren hergestellt.

Insbesondere ist das Kernverbundbauteil ein Gepäckfach bzw. Overhead Stowage Compartment oder ein Teil davon.

Gemäß einem weiteren Aspekt schafft die Erfindung ein Luftfahrzeug, das ein Kernverbundbauteil umfasst, das mit dem erfindungsgemäßen Verfahren hergestellt ist und/oder ein erfindungsgemäßes Kernverbundbauteil umfasst. Vorteile, Details, und Merkmale, die im Zusammenhang mit dem erfindungsgemäßen Verfahren beschrieben sind, gelten jeweils wechselseitig auch für die anderen Aspekte der Erfindung.

Ausführungsbeispiele der Erfindung werden im Folgenden anhand der beigefügten Zeichnungen näher erläutert. Darin zeigen:
**Figur 1** ein Kernverbundelement in schematischer Schnittdarstellung in verschiedenen Phasen des erfindungsgemäßen Verfahrens gemäß einem ersten bevorzugten Ausführungsbeispiel;
**Figur 2** ein Kernverbundelement in schematischer Schnittdarstellung in verschiedenen Phasen des erfindungsgemäßen Verfahrens gemäß einem zweiten bevorzugten Ausführungsbeispiel;
**Figuren 3 bis 5** zwei Kernverbundelemente in schematischer Schnittdarstellung, die gemäß einem dritten bevorzugten Ausführungsbeispiel des erfindungsgemäßen Verfahrens aneinander fixiert werden;
**Figur 6** ein Kernverbundelement in schematischer Schnittdarstellung, das gemäß einem vierten bevorzugten Ausführungsbeispiel des erfindungsgemäßen Verfahrens zur Bauteilfügung vorbereitet wird;
**Figuren 7 und 8** das in Figur 6 gezeigte Kernverbundelement vor und nach dem Aneinanderfügen mit einem zweiten derartigen Kernverbundelement;
**Figur 9** ein Gepäckfach bzw. Overhead Stowage Compartment eines Flugzeugs in schematischer räumlicher Darstellung, das erfindungsgemäß mit einem lasttragenden Element versehen ist;
**Figuren 10-13** verschiedene Schritte der Befestigung eines lasttragenden Elements in zwei gegenüberliegenden Kernverbundelementen des in Fig. 9 gezeigten Gepäckfachs gemäß einem fünften Ausführungsbeispiel des erfindungsgemäßen Verfahrens; und
**Figur 14** eine schematische Schnittdarstellung eines Kernverbundbauteils, das gemäß einem weiteren Ausführungsbeispiel des erfindungsgemäßen Verfahrens mit Lastpfaden versehen ist und eine bionische Struktur bildet.

In den Figuren sind gleiche oder einander entsprechende Elemente jeweils mit den gleichen Bezugszeichen bezeichnet und werden daher, sofern es nicht zweckmäßig erscheint, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

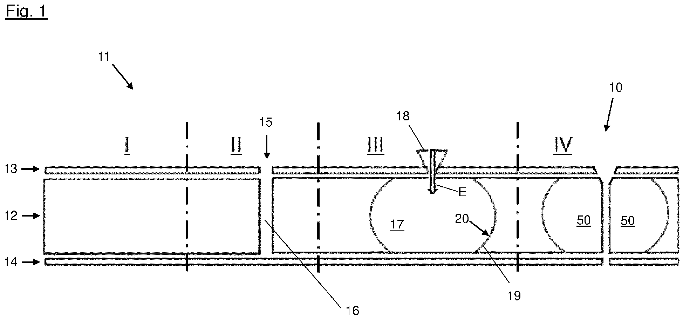

**Figur 1** zeigt den Prozessablauf bzw. die Schritte bei der Herstellung eines Kernverbundbauteils 10 in verschiedenen zeitlich aufeinanderfolgenden Phasen I bis IV als Schnittansicht. Die verschiedenen Phasen sind zur Veranschaulichung in der Figur durch gestrichelte Linien voneinander getrennt. In diesem Beispiel wird ein Kernverbundelement 11 in Form eines schaumbasierten Kernverbunds im Nachgang mit lokalen Anbindungen und Verstärkungen versehen.

In Phase I wird zunächst das Kernverbundelement 11 bereitgestellt. Es umfasst eine Kernstruktur 12, die zwischen zwei relativ dünnen Decklagen 13, 14 angeordnet ist. Die Kernstruktur 12 ist zum Beispiel aus einem Kunststoff gefertigt und als eine Schaumstruktur in Form eines Schaumstoffs ausgebildet. Die Kernstruktur 12 mit den Decklagen 13, 14 bildet einen ungestörten, fertigen Schaumkernverbund.

In Phase II wird eine Öffnung 15 in Form einer Bohrung 16 in die obere Decklage 13 eingebracht, d. h. in eine Decklagenseite, in diesem Fall in die obere Decklage 13. Die Bohrung 16, die als ein Loch ausgebildet ist, erstreckt sich durch die Decklage 13 und in diesem Beispiel durch die gesamte Kernstruktur 12 bis zur gegenüberliegenden Decklagenseite, welche durch die untere Decklage 14 gebildet wird. Die Bohrung 16 muss sich jedoch nicht notwendigerweise durch die gesamte Kernstruktur 12 bis zur gegenüberliegenden Decklagenseite 14 erstrecken. Je nach Bohrungstiefe wird sich aber das Strömungsprofil bei dem nachfolgenden Verfahrensschritt verändern.

In Phase III erfolgt nun das Einbringen einer erhitzten thermoplastischen Schmelze 17 in die Kernstruktur 12 bzw. in einen Teilbereich davon, wie durch den Pfeil E gekennzeichnet. Hierzu wird eine Einspritzdüse 18 auf die Bohrung 16 aufgesetzt. Nun wird durch die Düse 18 mit einem definierten Druck die thermoplastische Schmelze oder Thermoplastschmelze 17, die zum Beispiel auch ein thermoplastischer Heißklebstoff sein kann, in den Schaumverbund bzw. Schaumkernverbund eingepresst und gelangt in die Kernstruktur 12.

Durch entsprechende Abstimmung der Temperatur der Schmelze 17 mit den Eigenschaften des Schaumstoffs, der die Kernstruktur 12 bildet, wird dieser zum lokalen Kollabieren gebracht. Durch den Druck der Düse 18 verdrängt die Schmelze 17 beim Einpressen fortschreitend den Schaumstoff bzw. die Kernstruktur 12 und wird diesen nach ihrem Abkühlen durch einen thermoplastischen bzw. voll thermoplastischen Stopfen 19 ersetzen, der durch das verfestigte thermoplastische Material gebildet wird

Der Stopfen 19 und der Schaumstoff 12 verbinden sich während des Verfahrens optimal an der Front 20 der Schmelze bzw. verkleben sich. Dieser Prozess wird über den Druck beim Einpressen der Schmelze 17 geregelt, um eine optimale Verbindung bzw. Verklebung zu erzielen.

Sobald eine ausreichende Menge an Schmelze 17 in die Kernstruktur 12 eingebracht ist, wird der Druck bzw. Einspritzdruck auf einen Haltedruck reduziert, wodurch ein weiterer Vorschub der Front 20 der Schmelze 17 gestoppt wird und gleichzeitig ein Schrumpfen der Schmelze 17 innerhalb der Kernstruktur 12 verhindert wird. Mit der Einspritzdauer steigt der Prozessdruck an, da die Schmelze 17 an der Front 20 bereits beginnt sich abzukühlen. Neben dem Druck sind auch die Temperatur der Schmelze 17 und deren Viskosität weitere Kontrollfaktoren beim Einpressen der Schmelze 17. Die erforderlichen Einstellungen werden so vorgenommen, dass die Schmelze 17 den Schaumstoff verdrängt, welcher die Kernstruktur 12 bildet, jedoch keinen unkontrollierten Kollaps verursacht.

Um zu verhindern, dass die Deckhäute 13 bzw. 14 des Kernverbundelements 11 abgelöst werden, kann zusätzlich im Bereich der Einspritzung, d. h. in der Nähe der Einspritzdüse 18, ein in der Figur nicht dargestellter Niederhalter vorgesehen werden, sofern dies erforderlich ist. Der Niederhalter presst in diesem Fall das Werkstück bzw. das Kernverbundelement 11 gegen eine Auflagefläche, ähnlich dem Nähfuß einer Nähmaschine.

Nach dem vollständigen Abkühlen der Schmelze 17 bzw. des Werkstücks, das nun durch das mit dem erstarrten thermoplastischen Material befüllte Kernverbundelement 11 gebildet wird, kann dieses lokal bearbeitet und insbesondere gebohrt und gesenkt werden, wie in der Figur in Phase IV dargestellt. Die abgekühlte thermoplastische Schmelze 17 innerhalb der Kernstruktur 12 bildet nun eine lokale Verstärkung 50 des Kernverbundelements 11, das auf diese Weise ein verstärktes Kernverbundbauteil bildet. Das lokal verstärkte Kernverbundbauteil 10 wird gemäß dem Verfahren zum Beispiel mit ein oder mehreren lokalen Anbindungen versehen.

Das Werkstück kann abschließend auch lediglich plan gefräst werden, beispielsweise wenn nur eine lokale Verstärkung ohne Anbindungscharakter erforderlich ist. In diesem Fall ist das Loch oder Bohrloch 16, wie es in Phase II gebildet wurde, thermoplastisch verschlossen.

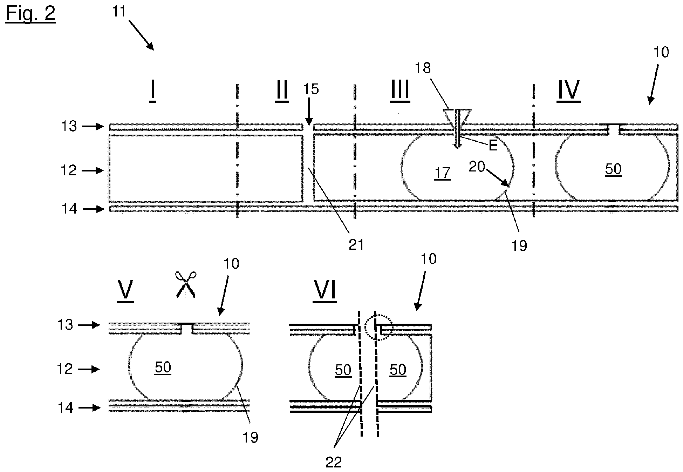

**Fig. 2** zeigt schematisch zeitlich aufeinanderfolgende Phasen I bis VI bei der Durchführung des erfindungsgemäßen Verfahrens gemäß einem weiteren Beispiel, wobei hier eine Randverstärkung gebildet wird. Dabei werden in dem gezeigten Beispiel insbesondere umlaufende Kernverbundkanten verstärkt.

Bei Kernverbunden bedeuten Schnittkanten im Verbundbereich auch gleichzeitig Instabilitäten. Durch das Verfahren werden die Außenkonturen verstärkt. In dem nachfolgend beschriebenen Beispiel für das erfindungsgemäße Verfahren kommen vergleichbare Prozesse und Werkstoffe zum Einsatz wie bei der Bildung der lokalen Verstärkung in dem vorhergehend beschriebenen Beispiel.

In Phase I wird zunächst ein ungestörter, fertiger Schaumkernverbund als Kernverbundelement 11 bereitgestellt. Dieses ist wie oben beschrieben ausgebildet (Schritt 1).

In Phase II erfolgt ein erstes Konturfräsen des späteren Bauteils. Die Fräsung schneidet im einfachsten Fall nur eine Decklage, in diesem Beispiel die obere Decklage 13, und in der stärksten Ausprägung die komplette Kernstruktur 12. Die rückseitige bzw. untere Decklage 14 bleibt ungestört. Es bildet sich dadurch als Öffnung 15 ein Frässpalt bzw. eine Fräsnut 21, der sich durch die Decklage 13 und durch die Kernstruktur 12 hindurch erstreckt (Schritt 2).

In Phase III wird der heiße thermoplastische Werkstoff 17 in den Frässpalt 21 eingepresst (Schritt 3). Dabei gelten vergleichbare Zusammenhänge aus Druck und Temperatur zur Prozesssteuerung wie sie bereits zu Figur 1 beschrieben wurden. Da es sich um eine umlaufende Verstärkung handelt, die in diesem Beispiel gebildet wird, kommt zusätzlich ein Vorschub der Düse 18 bzw. der Düsenvorschub als Steuergröße im Prozess hinzu. Der Düsenvorschub verläuft in Längsrichtung des Spalts 21, das heißt senkrecht zur Zeichenebene der Figur 2.

Gegebenenfalls werden die Schritte 2 und 3 kombiniert. In diesem Fall läuft der fortschreitende Frässchritt vor der Einspritzdüse 18 her. Dadurch kann verhindert werden, dass eine vollständige Vorbereitung der Fräsnut 21 zu einem Druckabfall beim Einbringen der Schmelze 17 führt, der mit den gegebenen Prozessparametern nicht kompensiert werden kann.

Die Ausbreitung der Schmelze 17 mit der Front 20 erfolgt wie oben zu Fig. 1 beschrieben.

In Phase IV erfolgt Schritt 4, in dem die Schmelze 17 abgekühlt wird. Die Schmelze 17 ist nun in die Kernstruktur 12 eingebracht und bildet einen Bereich mit verfestigtem thermoplastischen Material 19, das heißt eine eingespritzte Kante, die in der Figur als Querschnitt dargestellt ist. Auf diese Weise wird aus dem Kernverbundelement 11 ein lokal verstärktes Kernverbundbauteil 10 mit einer Verstärkung 50. Je nach Frästiefe bei der Vorbereitung kann sich der Profilquerschnitt auch andersartig ausbilden. Dieses Verhalten kann auch genutzt werden um eine gewichtsoptimierte Kantenverstärkung zu erreichen.

In Phase V wird in einem weiteren Schritt das verstärkte Kernverbundbauteil 10 im Bereich des verfestigten thermoplastischen Materials 19 aus der Trägerplatte bzw. dem lokal verstärkten Kernverbundbauteil 10 herausgeschnitten. Gegebenenfalls erfolgt vorab eine Überfräsung der Einspritzbereiche, um überstehende Thermoplastrückstände zu entfernen.

In Phase VI ist das Kernverbundbauteil in zwei voneinander getrennte Kernverbundbauteile mit jeweils lokaler Verstärkung 50 geteilt. Aufgrund des Verfahrens haben ihre beiden Schnittkanten 22 eine zusätzliche Kantenverstärkung im Bereich der Kernstruktur 12, die durch das verfestigte Thermoplastmaterial 19 bzw. durch die lokale Verstärkung 50 gebildet wird. Es kann dabei von Vorteil sein, den thermoplastischen Bereich 23 der Einspritzung im Bereich der Deckhaut bzw. Decklage 13 des Verbundes als zusätzlichen Stoßschutz zu nutzen.

Vorteilhaft kann die Düsengeometrie so modifiziert werden, dass der Thermoplast vollständig, oder aber zumindest hauptsächlich in ein Schnittufer eingebracht wird. Das ist vor allem dann vorteilhaft, wenn nur eine Seite später zur Anwendung kommt.

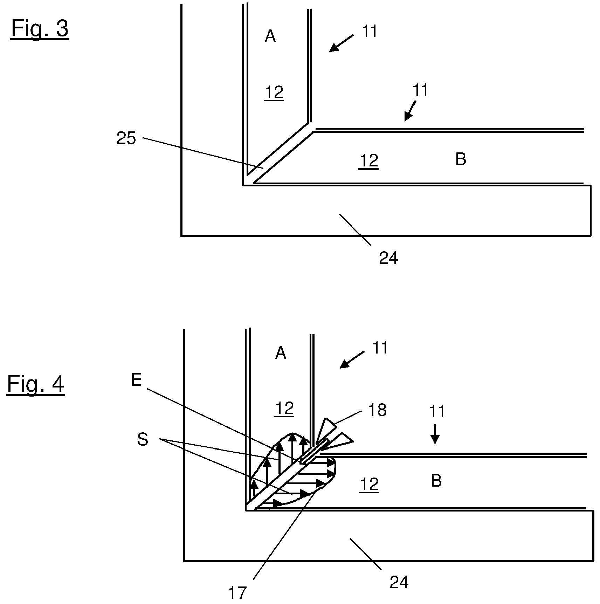

Anhand der **Figuren 3 bis 5** wird nachfolgend ein weiteres Beispiel des erfindungsgemäßen Verfahrens beschrieben, bei dem zwei Kernverbundelemente 11 aneinandergefügt werden. Beispielsweise erfordert die Herstellung dreidimensionaler Strukturen aus ebenen Bauteilen das Fügen verschiedener Komponenten.

Zunächst werden die zu fügenden Komponenten A, B, die jeweils als ein Kernverbundelement 11 wie oben beschrieben ausgebildet sind, in einem Werkzeug 24 relativ zueinander positioniert und fixiert, wie in Fig. 3 gezeigt. Idealerweise besteht zwischen den Komponenten ein Spalt 25, der das spätere Einspritzen der thermoplastischen "Fügemasse" ermöglicht, die durch die thermoplastische Schmelze gebildet wird. Je nach Gestaltung des Werkzeugs 24 können so auch sehr präzise Bauteiltoleranzen erreicht werden.

Wie in **Fig. 4** gezeigt wird in einem nächsten Schritt die Einspritzdüse 18 an die Kernverbundelemente oder Bauteile 11 herangeführt und es beginnt das Einbringen bzw. Einspritzen der Schmelze 17 in der Einspritzrichtung E in den Spalt 25. Dabei füllt die Schmelze 17 zunächst den gegebenen Spalt 25. Anschließend wird die Schmelze 17 unter dem Einspritzdruck in Richtung der Strömungspfeile S in die beiden Einzelkomponenten A, B gedrückt. Zur Fügung bewegt sich die Düse 18 entlang einer Fügenaht wie bei einem Schweißvorgang. Um zu verhindern, dass es durch den existierenden Spalt 25 zwischen den Einzelkomponenten A, B zu einem Druckverlust kommt, das heißt zu einem Ausbreiten der Schmelze 17 in Spaltrichtung und nur unzureichend in die Einzelkomponenten A, B, wird der Schmelzefluss in Spaltrichtung gegebenenfalls durch eine entsprechende Ausgestaltung der Düse 18 mechanisch begrenzt.

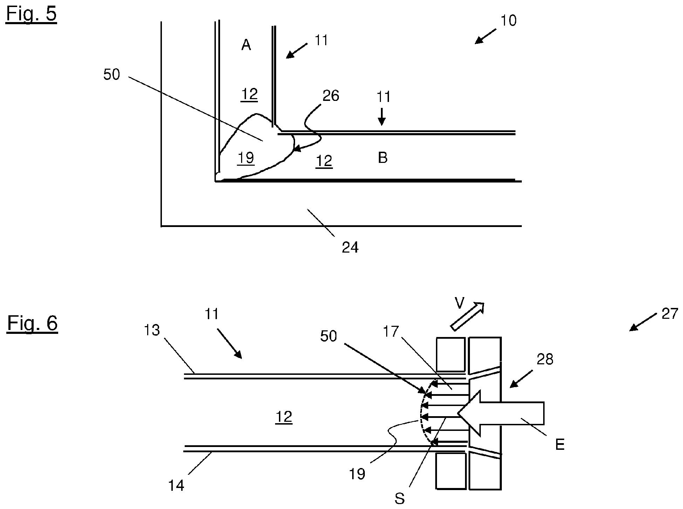

Dadurch, dass die Schmelze 17 die als Schaumstoff ausgebildete Kernstruktur 12 in den Randbereichen verdrängt, entsteht aus der Schmelze 17 nach deren Abkühlen eine Brücke bzw. ein Scharnier 26 aus dem verfestigten thermoplastischen Material 19 zwischen den Einzelbauteilen, wie in **Fig. 5** gezeigt. Die aneinandergefügten Kernverbundelemente 11 bilden auf diese Weise ein Kernverbundbauteil 10, das durch die abgekühlte und somit verfestigte thermoplastische Schmelze 17 bzw. 19 verstärkt ist, wobei die Verstärkung 50 durch die Brücke bzw. das Scharnier 26 gebildet wird.

Anhand von **Fig. 6** wird nun ein weiteres Ausführungsbeispiel des erfindungsgemäßen Verfahrens erläutert, bei dem eine Kantenvorbereitung zur Fügung von Bauteilen mittels Schweißen erfolgt.

Dabei wird das als Kernverbundelement 11 ausgebildete Bauteil zunächst aus einer generischen Platte ausgeschnitten und bereitgestellt.

Anschließend wird auf die Bauteilkante eine bewegbare Injektionsvorrichtung 27 aufgesetzt, die sich entlang der Bauteilkontur um das Bauteil 11 herumbewegt. Die Bewegung erfolgt in Richtung des Pfeils V. In dieser Vorrichtung ist eine Injektionseinheit 28 integriert, die die aufgeheizte Thermoplastschmelze 17 in das Kernverbundelement 11 einspritzt (Pfeil E). Die Injektion in die Bauteilkante erfolgt während der Bewegung V. Das thermoplastische Material 17 dringt in Richtung der Strömungspfeile S in die Kernstruktur 12 ein, das heißt an einer Seite des Kernverbundelements 11, die frei liegt bzw. nicht von einer der Decklagen 13, 14 überdeckt ist.

Nach abgeschlossenem Umlauf der Injektionsvorrichtung 27 und dem Abkühlen der thermoplastischen Schmelze 17 kann eine Nachbearbeitung des durch das Verfahren hergestellten Kernverbundbauteils 10 erfolgen, welches eine Verstärkung 50 aus verfestigtem thermoplastischem Material 19 enthält.

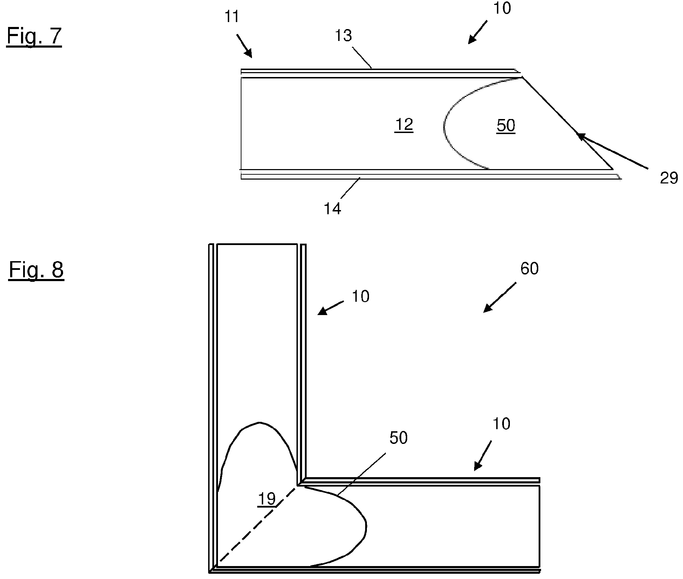

Beispielsweise erfolgt bei der Nachbearbeitung eine Vorbereitung für die Fügung mit einem weiteren, gleichartig ausgebildeten Kernverbundbauteil 10, wie in **Fig. 7** gezeigt. Dabei wird das verstärkte Kernverbundbauteil 10 insbesondere derart geschnitten, dass die Schnittkante 29 im Bereich der Kernstruktur 12 durch die Verstärkung 50 verläuft, und bevorzugt nicht durch einen übrigen Bereich der Kernstruktur 12.

Auf diese Weise wird die Verstärkung 50 als eine thermoplastische Kantenverstärkung ausgebildet.

Aufgrund seiner thermoplastischen Kantenverstärkung 50 kann das hergestellte Kernverbundbauteil 10 zum Verbinden mit einem weiteren derartigen Kernverbundbauteil 10 durch thermoplastisches Schweißen verwendet werden, wie in **Fig. 8** gezeigt. Dadurch wird ein aus mehreren verstärkten Kernverbundbauteilen 10 zusammengefügtes, thermoplastisch verschweißtes Kernverbundbauteil 60 geschaffen, das eine Verstärkung 50 aufweist, die durch das verfestigte thermoplastische Material 19 beider Kernverbundbauteile 10 gebildet ist.

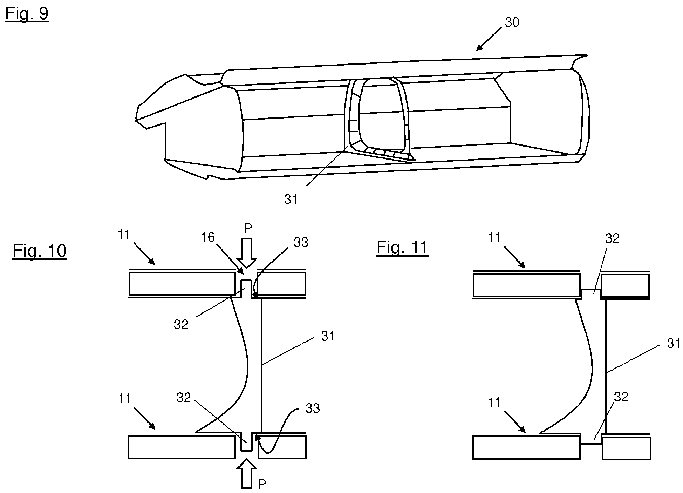

Anhand der **Figuren 9 bis 13** wird ein weiteres Anwendungsbeispiel des erfindungsgemäßen Verfahrens beschrieben, bei dem lasttragende Elemente in Kernstrukturen von Kernverbundbauteilen verankert werden.

Hierzu zeigt die **Fig. 9** ein Overhead Stowage Compartment (=OHSC) 30 bzw. Gepäckfach für ein Flugzeug in schematischer räumlicher Darstellung, das erfindungsgemäß mit einem lasttragenden Element 31 versehen ist. Das Lasttragende Element 31 dient dazu, im Gepäckfach bzw. OHSC 30 die auftretenden Lasten und die zulässigen Verformungen in Einklang zu bringen.

Gemäß diesem Ausführungsbeispiel des erfindungsgemäßen Verfahrens sind folgende Schritte vorgesehen, die anhand der Figuren 10 bis 13 erläutert werden, welche jeweils als schematische Schnittansicht ein exemplarisches lasttragendes Element 31 zwischen zwei sich gegenüberliegenden Kernverbundelementen 11 des OHSC 30 zeigen.

**Figur 10** zeigt das eingesetzte Element 31 zwischen den beiden Kernverbundelementen 11 in einem angefügten, jedoch noch nicht befestigten Zustand. Das lasttragende Element 31 ist als ein Strut bzw. eine Strebe ausgebildet, die an zwei sich gegenüber liegenden Seiten jeweils einen Vorsprung 32 in Form eines Zapfens aufweist, um das Element bzw. den Strut 31 an den sich gegenüberliegenden Kernverbundelementen 11 des OHSC 30 zu befestigen.

Die Kernverbundelemente 11 sind wie oben in den vorhergehenden Ausführungsbeispielen beschrieben ausgebildet und werden zur Durchführung des Verfahrens bereitgestellt. Anschließend wird das lasttragende Element 31 zwischen den beiden Kernverbundelementen 11 eingesetzt.

Im eingesetzten Zustand ragen die Zapfen 32 in durchgehende Löcher 16, die zuvor als Bohrungen in dem jeweiligen Kernverbund bzw. Kernverbundelement 11 ausgebildet wurden und sich durch dieses hindurch erstrecken. Der Durchmesser des jeweiligen Zapfens 32 ist geringer als der Innendurchmesser 16 des jeweiligen Lochs 16. Die Kernverbundelemente 11 liegen jeweils auf einer Auflagefläche 33 des Elements 31 auf.

Die Geometrie und die Anzahl der Zapfen 32 sind als exemplarisch zu betrachten. Das lasttragende Element 31 ist vorzugsweise aus einem Thermoplast gefertigt, das zum Beispiel faserverstärkt ist. Es kann aber auch aus einem anderen Material wie zum Beispiel aus Metall gefertigt sein.

In einem nächsten Schritt werden die Zapfen 32 im jeweiligen Kernverbundelement 11 unter Einwirkung von Druck und Temperatur flach gedrückt, also umgeformt. Der Schritt ist vergleichbar der Erzeugung eines Nietkopfes. Dabei wird der Druck in Richtung der Pfeile P auf den jeweiligen Zapfen 32 ausgeübt, so dass er umgeformt wird. Dieser Zustand ist in **Fig. 11** gezeigt.

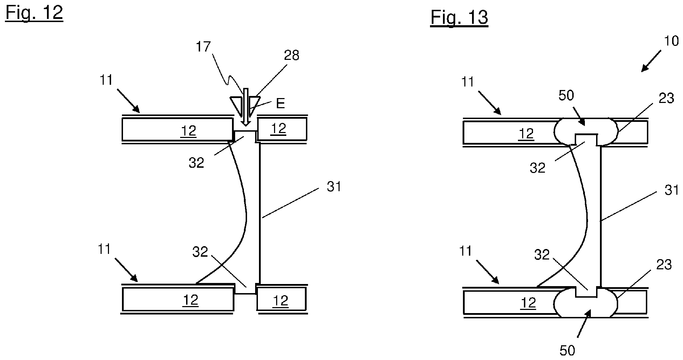

Wie in **Fig. 12** dargestellt, wird in einem nächsten erhitzte thermoplastische Schmelze 17 mittels einer Injektionseinheit 18 in die Löcher 16 beider Kernverbundelemente 11 injiziert (Pfeil E). Dabei dringt die erhitzte Schmelze 17 wie oben zu den anderen Ausführungsbeispielen beschrieben in über die Innenseiten der Löcher 16 in angrenzende Bereiche der Kernstrukturen 12 der Kernverbundelemente 11 ein.

Anschließend wird die thermoplastische Schmelze 17 abgekühlt, wobei sie sich verfestigt und nach dem Abkühlen einen verfestigten thermoplastischen Bereich 23 bildet, wie in **Fig. 13** gezeigt. Durch das Injizieren und Abkühlen der thermoplastischen Schmelze 17 wird der umgeformte Zapfen 32 an das jeweilige Kernverbundelement 11fixiert und dadurch an den Kernverbund angebunden. In diesem Zustand bildet der verfestigte thermoplastische Bereich 23 eine lokale Verstärkung 50. Das jeweilige Kernverbundelement 11 bildet auf diese Weise mit seiner lokalen Verstärkung 50 ein Kernverbundbauteil 10, das im Bereich der Anbindung des lasttragenden Elements 31 lokal verstärkt ist.

Die Geometrie des Elements 31 kann zum Beispiel auch in Form eines O-Rahmens oder C-Rahmens ausgebildet sein mit entsprechend mehr Zapfen 32 zur Fixierung.

Der thermoplastische Bereich 23 muss nicht nur punktuell sein, um den Strut einzubinden. Das Thermoplast kann auch als lokale oder linienförmige Verstärkung unabhängig von einem lasttragenden Element eingebracht werden.

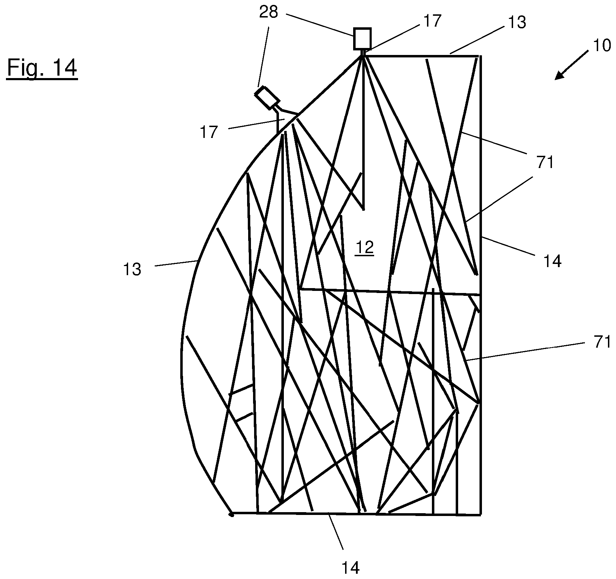

**Figur 14** zeigt eine schematische Schnittdarstellung eines Kernverbundbauteils 70, das gemäß einem weiteren Ausführungsbeispiel des erfindungsgemäßen Verfahrens mit einer Vielzahl von Lastpfaden 71 versehen wurde, welche Verstärkungen bilden. Das Kernverbundbauteil bildet auf diese Weise eine bionisch ausgelegte Struktur.

Bei der Herstellung wird wie oben beschrieben ein Kernverbundelement 11 bereitgestellt. Es umfasst eine Kernstruktur 12, die zwischen relativ dünnen Decklagen 13, 14 angeordnet ist. Die Kernstruktur 12 ist zum Beispiel als eine Schaumstruktur in Form eines Schaumstoffs ausgebildet. Die Kernstruktur 12 mit den Decklagen 13, 14 bildet einen ungestörten, fertigen Schaumkernverbund.

Die Lastpfade 71 werden durch Einspritzbahnen für den Thermoplast bzw. für das thermoplastische Material 17 gebildet. Nach dem Einspritzen des erhitzten thermoplastischen Materials 17 in die als Löcher ausgebildeten Einspritzbahnen mittels Injektionseinheiten 28 erfolgt das Abkühlen und Verfestigen der thermoplastischen Schmelze 17 in den Einspritzbahnen.

Bei Anwendung der beschriebenen Methode zur Erzeugung von bionischen Lastpfaden in Kernverbunden werden nach Fertigstellung die Lastpfade 71 auf der gefrästen Seite sichtbar sein. Die gegenüberliegende Seite ist ungestört. Der beschriebene Prozess kann selbstverständlich auch auf dreidimensionale Körper und Strukturen angewendet werden.

Beim Einspritzen und Aushärten des thermoplastischen Materials kann es von Vorteil sein, wenn das eingespritzte thermoplastische Material die Ufer der Deckhäute einbettet und über die Oberfläche der jeweiligen Deckhaut hinaus das Bauteil aufdickt.

Durch die Erfindung werden insbesondere folgende Vorteile gegenüber dem Stand der Technik erzielt:
Es sind nur generische Platten als Ausgangsprodukt erforderlich. Dadurch ergibt sich eine reduzierte Lagerhaltung. Die Plattenfertigung wird vereinfacht. Die Zykluszeiten werden reduziert, da keine Vernetzung von Klebstoffen notwendig ist, sondern das Abkühlen einer Schmelze. Auch ist kein Ausfräsen der Struktur notwendig. Weiterhin ist der Einsatz von verschiedenen Thermoplastwerkstoffen möglich, auch mit Faserverstärkung.

Darüber hinaus wird zum Beispiel eine Z-Verstärkung des Schaumstoffs nicht beschädigt, sondern die Z-Pins werden in die Schmelze eingebunden. Das führt zusätzlich zu einer verbesserten Anbindung. Abfälle durch Ausfräsen der Waben- bzw. Kernstruktur können vermieden werden. Darüber hinaus ist das Verfahren ist voll automatisierbar. Es ergeben sich keine Toleranzprobleme wie beispielsweise bei Plugs oder Stopfen, da sich die Schmelze dem Bauteilstatus anpasst.

Das Verfahren ist zum Beispiel auch anwendbar auf Wabenstrukturen. Dabei erfolgt ein Verdrängen der Wabe und das Auffüllen der Zellen.

### Bezugszeichenliste:

- 10: Kernverbundbauteil
- 11: Kernverbundelement
- 12: Kernstruktur
- 13, 14: Decklagen
- 15: Öffnung
- 16: Bohrung, Loch
- 17: thermoplastischen Schmelze
- 18: Düse
- 19: Verfestigtes thermoplastisches Material, Stopfen
- 20: Front
- 21: Spalt, Nut
- 22: Schnittkanten
- 23: verfestigter thermoplastischer Bereich
- 24: Werkzeug
- 25: Spalt, Fügespalt
- 26: Brücke, Scharnier
- 27: bewegbare Injektionsvorrichtung
- 28: Injektionseinheit
- 29: Schnittkante
- 30: Gepäckfach / Overhead Stowage Compartment
- 31: lasttragendes Element
- 32: Vorsprung / Zapfen
- 33: Auflagefläche
- 50: Verstärkung
- 60: thermoplastisch verschweißtes Kernverbundbauteil
- 70: Kernverbundbauteil mit Lastpfaden
- 71: Lastpfade
- A, B: Komponenten
- E: Einspritzrichtung
- P: Druck auf Zapfen
- S: Strömungsrichtung
- V: Bewegung der Injektionsvorrichtung

## Patentansprüche

1. Verfahren zum Herstellen eines lokal verstärkten Kernverbundbauteils, insbesondere für Luftfahrzeuge, umfassend die Schritte:
a) Bereitstellen mindestens eines Kernverbundelements (11), das eine Kernstruktur (12) umfasst, die zwischen mindestens zwei relativ dünnen Decklagen (13, 14) angeordnet ist, wobei die Kernstruktur (12) als eine Schaumstruktur und/oder Wabenstruktur ausgebildet ist, wobei zumindest in eine der Decklagen (13, 14) mindestens eine Öffnung (15) zum Einbringen der Schmelze (17) in die Kernstruktur (12) eingebracht wird, die als Spalt (21) ausgebildet wird und sich zumindest teilweise in die Kernstruktur (12) oder durch diese hindurch erstreckt;
b) Einbringen einer erhitzten thermoplastischen Schmelze (17) in einen oder mehrere Teilbereiche der Kernstruktur (12), wobei beim Einbringen der Schmelze (17) ein Anpresselement im Bereich der Öffnung (15) gegen die Decklage (13, 14) drückt, wobei der Spalt (21) durch Fräsen erzeugt wird, wobei gleichzeitig die erhitzte thermoplastische Schmelze (17) in den sich bildenden Spalt (21) eingepresst wird;
c) Abkühlen der thermoplastischen Schmelze (17) in der Kernstruktur (12), um ein Kernverbundbauteil (10; 60; 70) mit einer lokalen Verstärkung (50; 71) zu bilden.

2. Verfahren nach Anspruch 1, **dadurch gekennzeichnet, dass** das Einbringen der thermoplastischen Schmelze (17) unter Druck erfolgt, wobei der Druck derart bemessen ist, dass sie die Schaumstruktur in dem Teilbereich der Kernstruktur (12) verdrängt.

3. Verfahren nach einem der vorhergehenden Ansprüche, **dadurch gekennzeichnet, dass** beim Einbringen der Schmelze (17) deren Druck derart reduziert wird, dass ein weiterer Vorschub der Schmelze (17) innerhalb der Kernstruktur durch deren beginnende Abkühlung und Verfestigung an ihrer Front (20) gestoppt wird und gleichzeitig ein Schrumpfen des Volumens der Schmelze (17) innerhalb der Kernstruktur (12) verhindert wird

4. Verfahren nach einem der vorhergehenden Ansprüche, **dadurch gekennzeichnet, dass** das Kernverbundbauteil (10) nach dem Abkühlen und Verfestigen der thermoplastischen Schmelze (17) im Bereich des Spalts (21) geschnitten wird, um eine Kantenverstärkung im Bereich der Kernstruktur (12) zu bilden.

5. Verfahren nach einem der vorhergehenden Ansprüche, **dadurch gekennzeichnet, dass**
- in Schritt a) ein weiteres Kernverbundelement (11) zum Anfügen an das Kernverbundelement (11) bereitgestellt wird, wobei die beiden Kernverbundelemente (11) derart positioniert werden, dass ihre Kernstrukturen (12) voneinander beabstandet nebeneinander liegen und einen Fügespalt (25) bilden; und
- in Schritt b) die erhitzte thermoplastische Schmelze (17) in den Fügespalt (25) gedrückt wird, um sie in mindestens einen Teilbereich der jeweiligen Kernstruktur (12) einzupressen.

6. Verfahren nach einem der vorhergehenden Ansprüche, **dadurch gekennzeichnet, dass** das bereitgestellte Kernverbundelement (11) aus einer Kernverbundplatte geschnitten wird, und die erhitzte thermoplastische Schmelze (17) fortlaufend und/oder oder umlaufend entlang der Kontur des Kernverbundelements (11) in die Kernstruktur (12) injiziert wird, um eine Kantenverstärkung zu bilden.

7. Verfahren nach Anspruch 6, **dadurch gekennzeichnet, dass** zwei mit dem Verfahren hergestellte Kernverbundbauteile (10) im Bereich ihrer Kantenverstärkungen durch thermoplastisches Schweißen miteinander verbunden werden.

8. Verfahren nach einem der vorhergehenden Ansprüche, **dadurch gekennzeichnet, dass** in der Öffnung (15) ein Vorsprung (32) eines lasttragenden Elements (31 angeordnet wird, der unter Einwirkung von Druck und Temperatur innerhalb der Öffnung (15) zusammengepresst wird, und anschließend die erhitzte thermoplastische Schmelze (17) in die Öffnung (15) mit dem darin befindlichen Vorsprung (32) injiziert wird, um das Kernverbundelement (11) thermoplastisch mit dem lasttragenden Element (31 zu verbinden.

9. Verfahren nach Anspruch 8, **dadurch gekennzeichnet, dass** zwei oder mehr Kernverbundelemente (11) beabstandet voneinander mit jeweils mindestens einem Vorsprung (32) des lasttragenden Elements (31) verbunden werden, um mit dem lasttragenden Element (31) ein verstärktes Bauteil (30) zu bilden.

10. Kernverbundbauteil erhältlich durch ein Verfahren nach einem der vorhergehenden Ansprüche.

11. Luftfahrzeug, **dadurch gekennzeichnet, dass** es ein Bauteil (30) umfasst, das mit einem Verfahren nach einem der Ansprüche 1 bis 9 hergestellt ist und/oder ein Kernverbundbauteil (10, 60, 70) gemäß Anspruch 10 umfasst.

## Claims

1. Method for producing a locally reinforced core composite component, in particular for aircraft, comprising the steps of:
a) providing at least one core composite element (11) which comprises a core structure (12) which is arranged between at least two relatively thin cover layers (13, 14), wherein the core structure (12) is in the form of a foam structure and/or honeycomb structure, wherein, at least in one of the cover layers (13, 14), there is formed at least one opening (15) for introducing the melt (17) into the core structure (12), said opening being configured as a gap (21) and extending at least partially into the core structure (12) or through the latter;
b) introducing a heated thermoplastic melt (17) into one or more sub-regions of the core structure (12), wherein, during the introduction of the melt (17), a pressure-exerting element presses, in the region of the opening (15), against the cover layer (13, 14), wherein the gap (21) is produced by milling, wherein at the same time the heated thermoplastic melt (17) is pressed into the gap (21) that is forming;
c) cooling the thermoplastic melt (17) in the core structure (12) in order to form a core composite component (10; 60; 70) with a local reinforcement (50; 71).

2. Method according to Claim 1, **characterized in that** the introduction of the thermoplastic melt (17) is carried out under pressure, wherein the pressure is of such a magnitude that said melt displaces the foam structure in the sub-region of the core structure (12).

3. Method according to either of the preceding claims, **characterized in that**, during the introduction of the melt (17), its pressure is reduced in such a way that further advancement of the melt (17) within the core structure is stopped by the onset of its cooling and solidification at its front (20) and at the same time shrinkage of the volume of the melt (17) within the core structure (12) is prevented.

4. Method according to one of the preceding claims, **characterized in that**, after the cooling and solidification of the thermoplastic melt (17), the core composite component (10) is cut in the region of the gap (21) in order to form an edge reinforcement in the region of the core structure (12).

5. Method according to one of the preceding claims, **characterized in that**,
- in step a), provision is made of a further core composite element (11) for joining to the core composite element (11), wherein the two core composite elements (11) are positioned in such a way that their core structures (12) are situated next to one another with a spacing and form a joint gap (25); and,
- in step b), the heated thermoplastic melt (17) is pressed into the joint gap (25) in order to be pressed into at least one sub-region of the respective core structure (12).

6. Method according to one of the preceding claims, **characterized in that** the core composite element (11) provided is cut from a core composite plate, and the heated thermoplastic melt (17) is injected into the core structure (12) continuously and/or or peripherally along the contour of the core composite element (11) in order to form an edge reinforcement.

7. Method according to Claim 6, **characterized in that** two core composite components (10) produced using the method are connected to one another in the region of their edge reinforcements by thermoplastic welding.

8. Method according to one of the preceding claims, **characterized in that**, in the opening (15), there is arranged a projection (32) of a load-bearing element (31), which projection is compressed within the opening (15) under the action of pressure and temperature, and then the heated thermoplastic melt (17) is injected into the opening (15) with the projection (32) situated therein in order to connect the core composite element (11) thermoplastically to the load-bearing element (31).

9. Method according to Claim 8, **characterized in that** two or more core composite elements (11) are connected, spaced apart from one another, to in each case at least one projection (32) of the load-bearing element (31) in order to form with the load-bearing element (31) a reinforced component (30).

10. Core composite component obtainable by a method according to one of the preceding claims.

11. Aircraft, **characterized in that** said aircraft comprises a component (30) which is produced using a method according to one of Claims 1 to 9 and/or comprises a core composite component (10, 60, 70) according to Claim 10.

## Revendications

1. Procédé de fabrication d'un composant composite à noyau renforcée localement, notamment pour aéronefs, comprenant les étapes suivantes :
a) la fourniture d'au moins un élément composite à noyau (11) comprenant une structure de noyau (12) agencée entre au moins deux couches de recouvrement relativement minces (13, 14), la structure de noyau (12' étant réalisée sous la forme d'une structure en mousse et/ou d'une structure en nid d'abeilles, au moins une ouverture (15) étant pratiquée dans au moins l'une des couches de recouvrement (13, 14) pour introduire la matière fondue (17) dans la structure de noyau (12), laquelle ouverture est réalisée sous forme de fente (21) et s'étend au moins partiellement dans la structure de noyau (12) ou à travers celle-ci ;
b) l'introduction d'une masse thermoplastique fondue chauffée (17) dans une ou plusieurs zones partielles de la structure de noyau (12), un élément de pression appuyant contre la couche de recouvrement (13, 14) dans la zone de l'ouverture (15) lors de l'introduction de la masse fondue (17), la fente (21) étant créée par fraisage, la masse fondue thermoplastique chauffée (17) étant enfoncée simultanément dans la fente (21) qui se forme ;
c) le refroidissement de la masse fondue thermoplastique (17) dans la structure de noyau (12) afin de former un composant composite à noyau (10 ; 60 ; 70) avec un renforcement local (50 ; 71).

2. Procédé selon la revendication 1, **caractérisé en ce que** l'introduction de la masse fondue thermoplastique (17) s'effectue sous pression, la pression étant calculée de telle sorte qu'elle refoule la structure de mousse dans la zone partielle de la structure de noyau (12).

3. Procédé selon l'une quelconque des revendications précédentes, **caractérisé en ce que**, lors de l'introduction de la masse fondue (17), sa pression est réduite de telle sorte qu'une avance supplémentaire de la masse fondue (17) à l'intérieur de la structure de noyau est arrêtée par son refroidissement et sa solidification naissants à son front (20) et qu'en même temps, un rétrécissement du volume de la masse fondue (17) à l'intérieur de la structure de noyau (12) est empêché.

4. Procédé selon l'une quelconque des revendications précédentes, **caractérisé en ce que** le composant composite à noyau (10) est découpé dans la zone de la fente (21) après le refroidissement et la solidification de la masse fondue thermoplastique (17) afin de former un renforcement de bord dans la zone de la structure de noyau (12).

5. Procédé selon l'une quelconque des revendications précédentes, **caractérisé en ce que**
- à l'étape a), un autre élément composite à noyau (11) est fourni pour être assemblé à l'élément composite à noyau (11), les deux éléments composites à noyau (11) étant positionnés de telle sorte que leurs structures de noyau (12) soient espacées l'une de l'autre et forment un espace d'assemblage (25) ; et
- à l'étape b), la masse fondue thermoplastique (17) est pressée dans l'espace d'assemblage (25) afin de l'enfoncer dans au moins une zone partielle de la structure de noyau respective (12).

6. Procédé selon l'une quelconque des revendications précédentes, **caractérisé en ce que** l'élément composite à noyau (11) fourni est découpé à partir d'une plaque composite à noyau, et la masse fondue thermoplastique chauffée (17) est injectée de manière continue et/ou ou circulaire le long du contour de l'élément composite à noyau (11) dans la structure de noyau (12) afin de former un renforcement de bord.

7. Procédé selon la revendication 6, **caractérisé en ce que** deux composants composites à noyau (10) fabriqués avec le procédé sont reliés entre eux dans la zone de leurs renforcements de bord par soudage thermoplastique.

8. Procédé selon l'une quelconque des revendications précédentes, **caractérisé en ce qu'**une saillie (32) d'un élément porteur de charge (31) est agencée dans l'ouverture (15), laquelle saillie est comprimée sous l'effet de la pression et de la température à l'intérieur de l'ouverture (15), et ensuite la masse fondue thermoplastique chauffée (17) est injectée dans l'ouverture (15) avec la saillie (32) qui s'y trouve afin de relier thermoplastiquement l'élément composite à noyau (11) à l'élément porteur de charge (31).

9. Procédé selon la revendication 8, **caractérisé en ce que** deux ou plus de deux éléments composites à noyau (11) sont reliés à distance les uns des autres avec au moins une saillie (32) de l'élément porteur de charge (31) afin de former avec l'élément porteur de charge (31) un composant renforcé (30).

10. Composant composite à noyau pouvant être obtenu par un procédé selon l'une quelconque des revendications précédentes.

11. Aéronef, **caractérisé en ce qu'**il comprend un composant (30) fabriqué par un procédé selon l'une quelconque des revendications 1 à 9 et/ou un composant composite à noyau (10, 60, 70) selon la revendication 10.
